# EUROPÄISCHE PATENTSCHRIFT

(11) **EP 3 230 145 B1**
(45) Veröffentlichungstag und Bekanntmachung des Hinweises auf die Patenterteilung: **15.07.2020**
(21) Anmeldenummer: 15802029.7
(22) Anmeldetag: 25.11.2015
(51) Int. Cl.: B61D 15/06, B61G 11/16

(54) **VERFORMUNGSELEMENT**
DEFORMABLE ELEMENT
ÉLÉMENT DE DÉFORMATION

(30) Priorität: 11.12.2014 AT 508982014
(43) Veröffentlichungstag der Anmeldung: 18.10.2017
(73) Patentinhaber: Siemens Mobility Austria GmbH, 1210 Wien (AT)
(72) Erfinder: HEINZL, Philipp, 2640 Enzenreith (AT)
(74) Vertreter: Deffner, Rolf
(86) Internationale Anmeldenummer: PCT/EP2015/077597
(87) Internationale Veröffentlichungsnummer: WO 2016/091586

(56) Entgegenhaltungen:
- EP-A1- 2 236 380
- EP-A1- 2 786 903
- DE-A1-102005 051 621
- DE-U1- 29 722 844
- US-A1- 2005 211 520
- US-A1- 2014 174 867
- US-A1- 2014 191 532

## Beschreibung

### Technisches Gebiet

Die Erfindung betrifft ein Verformungselement.

### Stand der Technik

Zur Aufnahme kinetischer Energie bei Zusammenstößen von Fahrzeugen, insbesondere Passagierfahrzeugen werden Verformungselemente eingesetzt, welche in Ablauf des Verformungsgeschehens die kinetische Energie des Aufpralls irreversibel in Verformungs- und Wärmeenergie wandeln. Dadurch können impulsartig auftretende Kraftspitzen auf das Fahrzeug und in weiterer Folge auf die Passagiere verringert, sowie durch lokalen und kontrollierten Energieabbau der Überlebensraum der Passagiere erhalten werden. Bei Kraftfahrzeugen sind diese Verformungselemente meist als Teil der Tragstruktur ausgebildet, bei Schienenfahrzeugen ist auch ein diskreter Aufbau als getrennt herstellbares Verformungselement gebräuchlich. Diese Verformungselemente, auch als Crashmodule, Verformungsmodule, Knautschelemente oder Energieaufnahmeelemente bezeichneten Baugruppen können auf Basis verschiedener Technologien hergestellt werden. Beispielsweise sind Verformungselemente aus Metallschäumen oder rohrförmige Verformungselement die zur Energieaufnahme aufgeweitet werden gebräuchlich. Ein sehr häufig eingesetztes Funktionsprinzip beruht auf der progressiven Faltung von rechteckigen Rohren. Solche Verformungselemente können sehr einfach und preisgünstig hergestellt werden und weisen sowohl eine gut vorhersagbare Energieaufnahmekapazität als auch ein gut errechenbares Kraftniveau für die Verformung auf. Jedoch ist für den Beginn des Verformungsvorgangs eine deutlich höhere Kraft erforderlich als für den weiteren Verformungsvorgang, was gemäß dem Stand der Technik durch gezielte Schwächung des rohrförmigen Energieabsorbers verhindert werden kann. Dazu kann der rohrförmige Energieabsorber mit Schlitzen, Bohrungen, d.h. gezielten Schwächungen versehen werden, welche die Ausbildung einer ersten Faltung begünstigen. Diese Maßnahmen benötigen einen zusätzlichen, teilweise hohen Fertigungsaufwand und verhindern die Herstellung geschlossener und somit wasserdichter Verformungselemente. Besonders der Einsatz von Verformungselementen an Schienenfahrzeugen erfordert oftmals wasserdichte Verformungselemente, diese sonst nur extrem aufwendig vor Verrostung zu schützen sind oder aus wesentlich teurerem rostfreien Stahl hergestellt werden müssten.

Aus der Schrift US 2005/0211520 A1 ist ein Verformungselement, welches nach dem Prinzip des progressiven Beulens arbeitet bekannt, wobei zur Verringerung der Kraft für den Beginn des Verformungsvorgangs eine Mehrzahl von Vorverformungen und Ausnehmungen vorgesehen ist. Diese Ausnehmungen verhindern aus Auftreten von Kraftspitzen im Verformungsverlauf. Dieses Verformungselement ist jedoch sehr aufwendig herzustellen und kann nicht wasserdicht ausgeführt werden.

### Darstellung der Erfindung

Der Erfindung liegt daher die Aufgabe zugrunde, ein Verformungselement anzugeben, welches eine sehr niedrige Kraftspitze am Beginn des Verformungsvorgangs aufweist, sehr preisgünstig herstellbar ist und dabei wasserdicht gestaltbar ist.

Die Aufgabe wird durch ein Verformungselement mit den Merkmalen des Anspruchs 1 gelöst. Vorteilhafte Ausgestaltungen sind Gegenstand untergeordneter Ansprüche.

Dem Grundgedanken der Erfindung nach wird ein Verformungselement, umfassend ein Profilrohr mit rechteckigem Querschnitt und eine, das Profilrohr an einem Ende verschließende Platte beschrieben, wobei an dem mit der Platte verschlossenen Ende des Profilrohrs ein Bügel zwischen gegenüberliegenden Seiten des Profilrohrs befestigt ist.

Dadurch ist der Vorteil erzielbar, bei einem axialen Auftreffen eines Kollisionsgegners eine Initialdeformation des Profilrohrs sicherstellen zu können, wodurch die weitere Verformung des Profilrohrs mit dem, aus der jeweiligen Geometrie und den Materialeigenschaften bestimmten Kraftniveau erfolgt. Die bei der Verformung von Profilrohren durch Druckkräfte in Längsrichtung sonst auftretende Kraftspitze entfällt weitestgehend, da der Bügel durch seine Formgebung im Ablauf des Verformungsgeschehens zuerst auf die Platte trifft und diese deformiert, wodurch eine Initialverformung der Wände des Profilrohrs eingeleitet wird. Durch die besondere Formgebung des Bügels entsteht eine Rohrverformung, die dem natürlichen Beulmuster eines Profilrohrs mit rechteckigem Querschnitt entspricht, d.h. zwei gegenüberliegende Rohrflächen beulen nach außen, die anderen beiden nach innen, wobei sich dieses Beulmuster abwechselnd fortsetzt.

Der Bügel ist vorzugsweise aus Metallblech gefertigt und gemäß einer Ausführungsform so geformt das er in seinem Verlauf von einer Befestigungsstelle zu nächsten zuerst einen konvexen Abschnitt, gefolgt von einem konkaven Abschnitt, gefolgt von einem konvexen Abschnitt aufweist. Dabei ist konvex und konkav aus Sicht des Profilrohrs in Richtung eines axial Kollisionsgegners zu sehen. Der Bügel ist so zu formen, dass bei einem Zusammenstoß der konkave Abschnitt als erstes die Platte berührt und diese dabei eindrückt. Die weitere erzwungene Verformung des Bügels bewirkt dabei eine Verformung der Seitenwände des Profilrohrs, sodass für die weitere Verformung die sonst unvermeidliche Kraftspitze entfällt. Der Bügel wirkt als Auslöseeinrichtung einer progressiven Faltung des Profilrohrs. Diese weitere Faltung des Profilrohrs erfolgt nach vollständiger Verformung und flachdrücken des Bügels gemäß dem natürlichen Beulmuster.

Gemäß einer weiteren vorteilhaften Ausführungsform weist der Bügel einen im Wesentlichen U-förmigen Verlauf auf. Dabei stellt der Bügel beidseitig in einem ersten Abschnitt eine Verlängerung der gegenüberliegenden Seitenwände des Hohlrohrs da, welche mittels eines gebogenen Abschnitts verbunden sind. Diese, gegenüber einem doppelt s-förmigen Bügel vereinfachte Ausführungsform, wird im Ablauf des Verformungsgeschehens in den ersten Phasen so verformt, dass auch ein s-förmiger Verlauf des Bügels entsteht. In den weiteren Phasen verhält sich ein Verformungselement mit U-förmigen Bügel praktisch identisch mit einem Verformungselement mit doppelt s-förmigen Bügel, jedoch ist durch den bei einem U-förmigen Bügel erhöhten Leerweg bis zum Verformen des Hohlrohrs ein gering verspätetes Ansprechen des Verformungselements zu erwarten. Weiters bietet ein Verformungselement mit doppelt s-förmigen Bügel mehr Parameter zur Abstimmung des Verformungsverhaltens, jedoch ist ein höherer Aufwand für die Herstellung des doppelt s-förmigen Bügels zu erwarten.

Das Profilrohr ist als geschlossenes, rechteckiges Hohlrohr auszuführen, wobei auch ein quadratischer Querschnitt angewandt werden kann.

Die konkrete Ausformung eines erfindungsgemäßen Verformungselements erfolgt unter Bedacht der zu erwartenden aufzunehmenden Energie und des zur Verfügung stehenden Bauraums. Dabei werden die Wandstärken, die Form und das Material typischerweise im Rahmen einer Computersimulation festgelegt.

Es ist besonders vorteilhaft, schweißbare Materialkombinationen für das Profilrohr, die Platte und den Bügel zu wählen, da dabei eine sehr einfach Verbindung dieser Bauteile herstellbar ist und bei entsprechend ausgeführter Verschweißung der Platte mit dem Profilrohr ein wasserdichtes Verformungselement herstellbar ist.

Die Befestigung des Verformungselements an einer Tragstruktur, typischerweise ein Wagenkasten eines Fahrzeugs, erfolgt gemäß den Erfordernissen des Einsatzes. Dabei ist auch eine Verschweißung vorteilhaft, wenn die Wasserdichtheit gewährleistet sein muß. Alternativ dazu kann das Verformungselement lösbar befestigt werden, beispielsweise mittels einer Grundplatte und einer Schraubverbindung.

### Kurzbeschreibung der Zeichnungen

Es zeigen beispielhaft:
**Fig.1** Verformungselement.
**Fig.2** Verformungselement - Seitenansicht.
**Fig.3** Verformungselement Simulation Stufe 1.
**Fig.4** Verformungselement Simulation Stufe 2.
**Fig.5** Verformungselement Simulation Stufe 3.
**Fig.6** Verformungselement Simulation Stufe 4.
**Fig.7** Verformungselement Simulation Stufe 5.
**Fig.8** Verformungselement Simulation Stufe 6.
**Fig.9** Verformungselement U-förmiger Bügel.
**Fig.10** Verformungselement U-förmiger Bügel -Seitenansicht.
**Fig.11** Verformungselement U-förmiger Bügel Simulation Stufe 1.
**Fig.12** Verformungselement U-förmiger Bügel Simulation Stufe 2.

### Ausführung der Erfindung

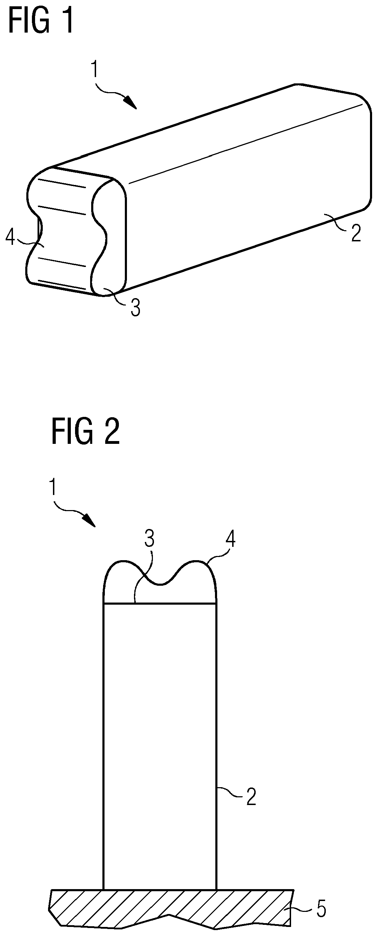

**Fig.1** zeigt beispielhaft und schematisch ein Verformungselement. Es ist ein Verformungselement 1 dargestellt, welches ein Profilrohr 2 umfasst und welches einseitig mittels einer Platte 3 verschlossen ist. Diese Platte 3 ist an jenem Ende des Profilrohrs 2 angeordnet, an welchem bei einem Zusammenstoß der Kollisionsgegner auftrifft. Das Profilrohr 2 ist in gezeigtem Ausführungsbeispiel mit quadratischem Querschnitt ausgebildet. Die mit der Platte 3 verschlossene Seite des Profilsrohrs 2 ist weiters mit einem Bügel 4 ausgestattet. Der Bügel 4 ist aus Blech geformt und erstreckt sich zwischen gegenüberliegenden Seiten des Profilsrohrs 2. Der Bügel 4 ist an den Verbindungsstellen mit dem Profilrohr 2 jeweils fest verbunden, typischerweise verschweißt. Der Bügel 4 folgt einer mehrfach gebogenen Form, welche doppelt S-förmig ausgebildet ist. Dabei ist der Verlauf zwischen den Befestigungsstellen an dem Profilrohr als Abfolge eines konvexen Abschnitts, gefolgt von einem konkaven Abschnitt, gefolgt von einem weiteren konvexen Abschnitt gegeben. In Fig.2 ist diese Abfolge deutlich ersichtlich. Das Profilrohr 2 ist an seinem dem Bügel 4 abgewandten Ende zur Befestigung an einem Trägerbauteil 5 ausgebildet. Eine solche Befestigungsmöglichkeit ist in Fig.1 nicht näher dargestellt.

**Fig.2** zeigt beispielhaft und schematisch ein Verformungselement in einer Seitenansicht. Es ist das Verformungselement 1 aus Fig. 2 in einer Seitenansicht gezeigt, in welcher die Formgebung des Bügels 4 besonders gut ersichtlich ist. Der S-förmige Verlauf der Form des Bügels 4 beginnt beidseitig an jede Befestigungsstelle mit dem Profilrohr 2 mit ein nach vorne gewölbten, konvexen Abschnitt. Zwischen den beiden konvexen Abschnitten ist ein nach hinten gewölbter konkaver Abschnitt angeordnet. Die der Platte 3 zugewandte Spitze (das Maximum) des konkaven Abschnitts berührt die Platte 3 nicht sondern bildet einen bestimmten Abstand zu der Platte 3 aus.

Weiters ist ein Trägerbauteil 5 gezeigt, an welchem das Verformungselement 1 befestigt ist. Das Verformungselement 1 ist so orientiert, dass ein Zusammenstoß in Richtung auf den Bügel 4 erfolgt, darauf beziehen sich die Begriffe vorne und hinten.

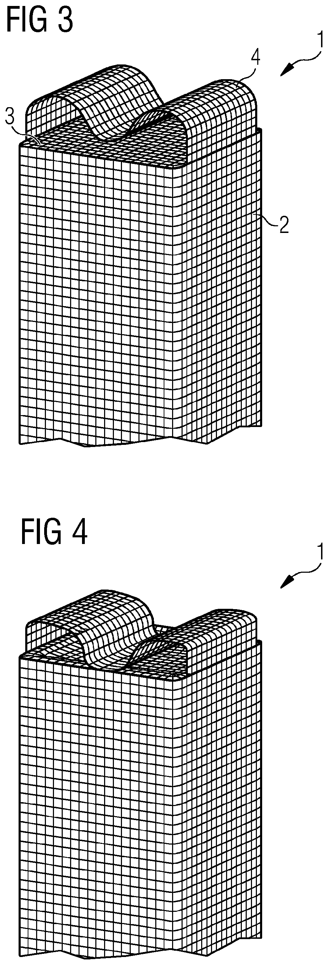

Fig.3 bis 8 zeigen die Verformung eines Verformungselements in einer Computersimulation.

**Fig.3** zeigt beispielhaft und schematisch ein Verformungselement in einer Simulation, Stufe 1. Es ist ein Verformungselement 1 in einer Gitternetzliniendarstellung einer Computersimulation gezeigt. Das Verformungselement 1 ist ähnlich dem in den Fig. 1 und 2 dargestellten Verformungselement 1 ausgebildet und weist ein im Wesentlichen quadratisches Profilrohr 2, eine Platte 3 und einen Bügel 4 auf. Zur Verdeutlichung des Verformungsablaufs ist der Kollisionsgegner nicht dargestellt, ein solcher Gegner ist in den Fig. 3 bis 8 als unverformbar angenommen und weist eine flache Struktur auf, trifft also flächenförmig und axial in Richtung der Längsachse des Verformungselements auf. Fig.1 zeigt den unverformten Zustand vor dem Auftreffen.

**Fig.4** zeigt beispielhaft und schematisch ein Verformungselement in einer Simulation, Stufe 2. Es ist der Beginn der Verformung, unmittelbar nach dem Auftreffen des Kollisionsgegners dargestellt. Die Spitze des konkaven Abschnitts des Bügels 4 berührt die Platte 3 und beginnt diese einzudrücken.

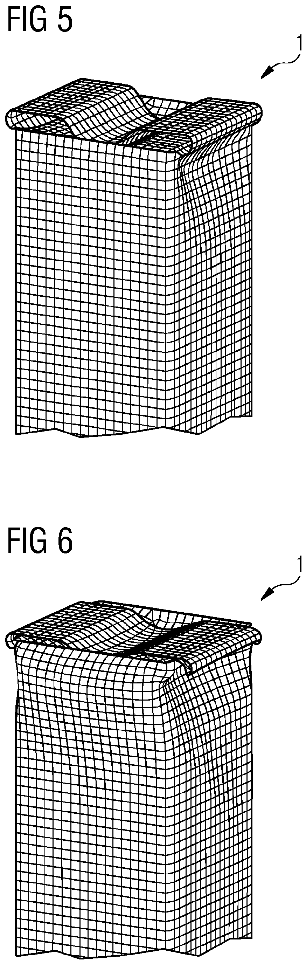

**Fig.5** zeigt beispielhaft und schematisch ein Verformungselement in einer Simulation, Stufe 3. Der Bügel 4 hat die Platte 3 bereits tiefer eingedrückt und die beiden Seiten des Profilrohrs 2, an welchen der Bügel 4 befestigt ist werden durch die Verformung des Bügels 4 nach außen gebeult. Die beiden weiteren, gegenüberliegenden Seiten des Profilrohrs 2 sind durch die verformte Platte 3 nach innen gebogen. Durch diese Initialverformung kann ein dem natürlichen Beulmuster entsprechender Verformungsverlauf initiiert werden, die sonst erforderliche Kraftspitze entfällt weitsestgehend.

**Fig.6** zeigt beispielhaft und schematisch ein Verformungselement in einer Simulation, Stufe 4. Der Bügel 4 ist bereits flachgedrückt, es folgt das alleinige progressive Falten des Profilrohrs 2.

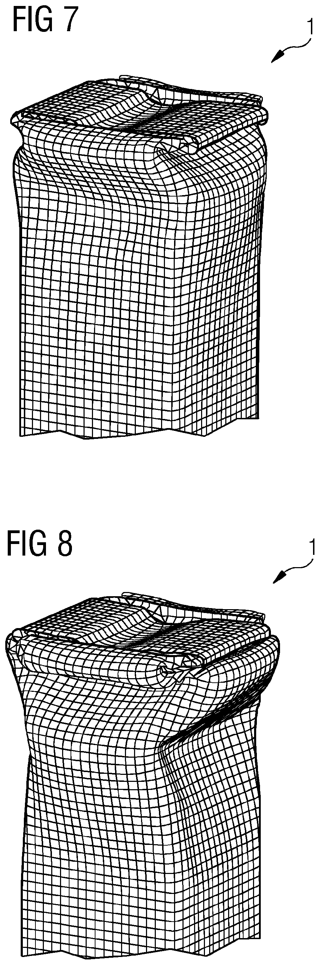

**Fig.7** zeigt beispielhaft und schematisch ein Verformungselement in einer Simulation, Stufe 5. Der Verformungsverlauf erfolgt ausschließlich in dem Profilrohr 2. Der Bügel 4 nimmt an keiner weiteren Verformung mehr teil.

**Fig.8** zeigt beispielhaft und schematisch ein Verformungselement in einer Simulation, Stufe 6. Weiterer Verformungsverlauf, die Seitenwände des Profilrohrs 2 weisen bereits jeweils zwei Falten auf.

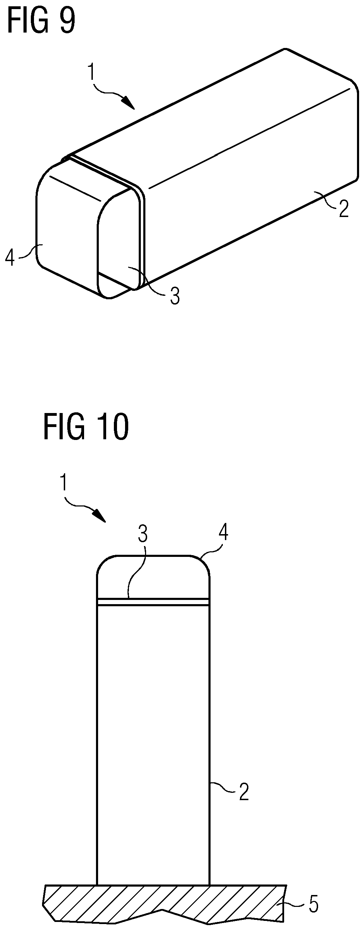

**Fig.9** zeigt beispielhaft und schematisch ein Verformungselement mit U-förmigen Bügel. Es ist ein Verformungselement 1 mit einem U-förmigen Bügel 4 dargestellt. Die weiteren Bauteile, wie das Hohlrohr 2 und die Platte 3 entsprechen dem in Fig. 1 gezeigten Ausführungsbeispiel.

**Fig.10** zeigt beispielhaft und schematisch ein Verformungselement mit U-förmigen Bügel in einer Seitenansicht. Es ist das Verformungselement 1 aus Fig. 9 in einer Seitenansicht gezeigt, in welcher die U-Form des Bügels 4 besonders gut ersichtlich ist. Weiters ist ein Trägerbauteil 5 gezeigt, an welchem das Verformungselement 1 befestigt ist.

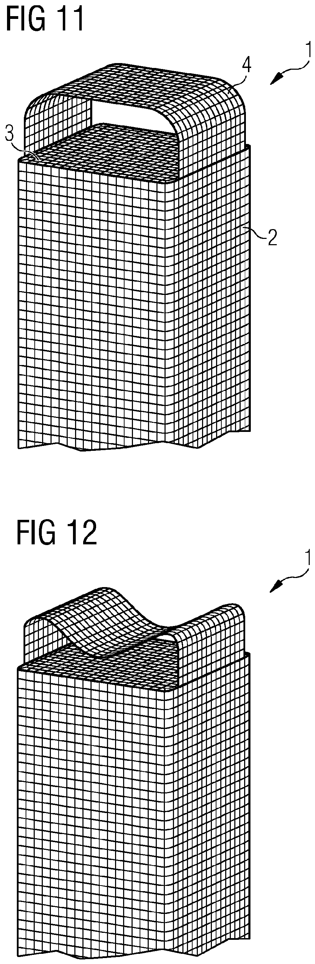

**Fig.11** zeigt beispielhaft und schematisch ein Verformungselement in einer Simulation, Stufe 1. Es ist ein Verformungselement 1 in einer Gitternetzliniendarstellung einer Computersimulation gezeigt. Das Verformungselement 1 ist ähnlich dem in den Fig. 9 und 10 dargestellten Verformungselement 1 ausgebildet und weist ein im Wesentlichen quadratisches Profilrohr 2, eine Platte 3 und einen U-förmigen Bügel 4 auf. Zur Verdeutlichung des Verformungsablaufs ist der Kollisionsgegner nicht dargestellt, ein solcher Gegner ist in den Fig. 9 und 10 als unverformbar angenommen und weist eine flache Struktur auf, trifft also flächenförmig und axial in Richtung der Längsachse des Verformungselements auf. Fig.1 zeigt den unverformten Zustand vor dem Auftreffen.

**Fig.12** zeigt beispielhaft und schematisch ein Verformungselement in einer Simulation, Stufe 2. Es ist das Verformungselement aus Fig.11 in der nächsten Stufe des Verformungsverlaufs gezeigt. Dabei ist der U-förmige Bügel 4 durch den auftreffenden Kollisionsgegner so verformt, dass er einen doppelt s-förmigen Verlauf aufweist. Der weitere Verformungsablauf folgt dem in den Fig.4 bis 8 dargestellen Verlauf bei einem doppelt s-förmigen Bügel. Auf eine Darstellung eines äquivalenten Verlaufs kann deshalb verzichtet werden.

### Liste der Bezeichnungen

- 1: Verformungselement
- 2: Profilrohr
- 3: Platte
- 4: Bügel
- 5: Trägerbauteil

## Patentansprüche

1. Verformungselement (1), umfassend ein Profilrohr (2) mit rechteckigem Querschnitt und einen Bügel (4) welcher zwischen gegenüberliegenden Seiten des Profilrohrs (2) befestigt ist
**dadurch gekennzeichnet, dass**
eine das Profilrohr (2) an einem Ende verschließende Platte (3) vorgesehen ist und der Bügel (4) an dem mit der Platte (3) verschlossenen Ende des Profilrohrs (2) angeordnet ist.

2. Verformungselement (1) nach Anspruch 1, **dadurch**
**gekennzeichnet, dass** das Profilrohr (2), die Platte (3) und das Bügel (4) jeweils verschweißt sind.

3. Verformungselement (1) nach einem der Ansprüche 1 oder 2, **dadurch gekennzeichnet, dass** das Profilrohr (2) an seinem dem Bügel (4) abgewandten Ende zur Befestigung an einem Trägerbauteil (5) ausgebildet ist.

4. Verformungselement (1) nach Anspruch 3, **dadurch**
**gekennzeichnet, dass** das Profilrohr (2) zur Herstellung einer Schweißverbindung mit dem Trägerbauteil (5) ausgebildet ist.

5. Verformungselement (1) nach Anspruch 3, **dadurch**
**gekennzeichnet, dass** das Profilrohr (2) zur Herstellung einer Schraubverbindung mit dem Trägerbauteil (5) ausgebildet ist.

6. Verformungselement nach einem der Ansprüche 1 bis 5,
**dadurch gekennzeichnet, dass** der Bügel (4) aus Blech gefertigt ist und zwischen den Befestigungsstellen an dem Profilrohr (2) einem im Wesentlichen U-förmigen Verlauf folgt.

7. Verformungselement (1) nach einem der Ansprüche 1 bis 5, **dadurch gekennzeichnet, dass** der Bügel (4) aus Blech gefertigt ist und zwischen den Befestigungsstellen an dem Profilrohr (2) einer Form folgt, welche einen konvexen Abschnitt, gefolgt von einem konkaven Abschnitt, gefolgt von einem konvexen Abschnitt aufweist.

8. Verformungselement (1) nach Anspruch 7, **dadurch**
**gekennzeichnet, dass** die Spitze des konkaven Abschnitts einen Abstand zur Platte (3) aufweist.

## Claims

1. Deformable element (1), comprising a profiled tube (2) with a rectangular cross-section and a bracket (4) which is fastened between opposite sides of the profiled tube (2),
**characterised in that**
a plate (3) which closes the profiled tube (2) at one end is provided and the bracket (4) is arranged at the end of the profiled tube (2) that is closed by the plate (3).

2. Deformable element (1) according to claim 1, **characterised in that** the profiled tube (2), the plate (3) and the bracket (4) are each welded.

3. Deformable element (1) according to one of claims 1 or 2, **characterised in that** at its end facing away from the bracket (4) the profiled tube (2) is embodied to fasten to a support component (5).

4. Deformable element (1) according to claim 3, **characterised in that** the profiled tube (2) is embodied to produce a welding connection with the support component (5).

5. Deformable element (1) according to claim 3, **characterised in that** the profiled tube (2) is embodied to produce a screw connection with the support component (5).

6. Deformable element according to one of claims 1 to 5, **characterised in that** the bracket (4) is manufactured from sheet metal and follows an essentially U-shaped course between the fastening points on the profiled tube (2).

7. Deformable element (1) according to one of claims 1 to 5, **characterised in that** the bracket (4) is manufactured from sheet metal and follows a form between the fastening points on the profiled tube (2) which has a convex section, followed by a concave section, followed by a convex section.

8. Deformable element (1) according to claim 7, **characterised in that** the peak of the concave section has a distance from the plate (3).

## Revendications

1. Élément de déformation (1) comprenant un tube profilé (2) à section rectangulaire et un étrier (4) fixé entre des côtés opposés du tube profilé (2)
**caractérisé en ce**
**qu'**une plaque (3) fermant le tube profilé (2) à une extrémité est prévue et l'étrier (4) est disposé à l'extrémité du tube profilé (2) fermé par la plaque (3).

2. Élément de déformation (1) selon la revendication 1, **caractérisé en ce que** le tube profilé (2), la plaque (3) et l'étrier (4) sont chacun soudés.

3. Élément de déformation (1) selon l'une des revendications 1 ou 2, **caractérisé en ce que** le tube profilé (2) est conçu à son extrémité opposée à l'étrier (4) pour être fixé à un élément de support (5).

4. Élément de déformation (1) selon la revendication 3, **caractérisé en ce que** le tube profilé (2) est conçu pour réaliser une connexion soudée avec l'élément de support (5).

5. Élément de déformation (1) selon la revendication 3, **caractérisé en ce que** le tube profilé (2) est conçu pour réaliser un raccord à vis avec l'élément de support (5).

6. Elément de déformation selon l'une des revendications 1 à 5, **caractérisé en ce que** l'étrier (4) est fabriqué en tôle et suit un tracé sensiblement en forme de U entre les points de fixation du tube profilé (2).

7. Élément de déformation (1) selon l'une des revendications 1 à 5, **caractérisé en ce que** l'étrier (4) est fabriqué en tôle et suit, entre les points de fixation du tube profilé (2), une forme qui a une section convexe, suivie d'une section concave, suivie d'une section convexe.

8. Elément de déformation (1) selon la revendication 7, **caractérisé en ce que** la pointe de la section concave est à distance de la plaque (3).
